# EUROPEAN PATENT APPLICATION

(11) **EP 4 393 794 A1**
(43) Date of publication of application: **03.07.2024**
(21) Application number: 22914916.6
(22) Date of filing: 28.12.2022
(51) Int. Cl.: B62D 25/08

(54) **VEHICLE ENGINE CABIN STRUCTURE AND VEHICLE**

(30) Priority: 31.12.2021 CN 202111676082
(71) Applicant: BYD Company Limited, Shenzhen, Guangdong 518118 (CN)
(72) Inventor: ZHAO, Baoguang, Shenzhen Guangdong 518118 (CN); TIAN, Hongsheng, Shenzhen Guangdong 518118 (CN); LIU, Tengyong, Shenzhen Guangdong 518118 (CN); YANG, Yanbing, Shenzhen Guangdong 518118 (CN); QUAN, Yi, Shenzhen Guangdong 518118 (CN)
(74) Representative: Arnold & Siedsma
(86) International application number: PCT/CN2022/142834
(87) International publication number: WO 2023/125664

(57) **Abstract**

A vehicle front compartment structure and a vehicle. The vehicle front compartment structure includes a front anti-collision beam, a front longitudinal beam, an upper side beam, and an energy-absorbing box. A side of the energy-absorbing box is connected to the front anti-collision beam. The front longitudinal beam and the upper side beam are separately connected to another side of the energy-absorbing box. A first force transmission structure is formed through the front anti-collision beam, the energy-absorbing box, and the upper side beam. A second force transmission structure is formed through the front anti-collision beam, the energy-absorbing box, and the front longitudinal beam.

## Description

### CROSS-REFERENCE TO RELATED APPLICATIONS

The present disclosure claims priority to Chinese Patent Application No. 202111676082.8, filed on December 31, 2021, and entitled "VEHICLE FRONT COMPARTMENT STRUCTURE AND VEHICLE". The entire content of the above-referenced application is incorporated herein by reference.

### FIELD

The present disclosure relates to a vehicle front compartment structure and a vehicle.

### BACKGROUND

In the related art, compared with a front compartment structure of a conventional vehicle, a front compartment structure of a pure electric vehicle has two prominent problems in terms of safety. First, the pure electric vehicle is more afraid of a small-angle collision, for example, a 25% small-offset collision, because both an occupant and a battery module need to be protected after the collision. Longitudinal beams of a front compartment of the conventional vehicle are usually arranged as two parallel beam structures that extend in an X direction, and there is a large spacing between the two parallel beam structures. However, the pure electric vehicle usually uses a low profile tire because of a modeling trend. In this case, a spacing between root regions of the longitudinal beams is narrowed. This greatly impacts backward force transmission (to door sills and A-pillars of the vehicle) of the longitudinal beams. In addition, a rear end of an energy-absorbing box is directly connected to the longitudinal beam, an outer side of the longitudinal beam is vacant without additional force transmission structural member, and an upper side beam is lap-jointed behind a front vacant region of the longitudinal beam.

Second, the front compartment structure of the pure electric vehicle lacks natural physical defense. A conventional fuel vehicle usually uses a front-engine and front-wheel-drive design. When the conventional fuel vehicle encounters a frontal load, an engine, a water tank, a powertrain suspension structure, and the like that are arranged inside the front compartment may be used for resisting, to absorb some collision energy in a critical moment. However, an existing pure electric vehicle usually uses a rear-wheel-drive design in which there is a large empty space inside a front compartment, and tends to use a front storage compartment design. This structure loses natural physical defense compared with the conventional vehicle.

### SUMMARY

Embodiments of the present disclosure provide new technical solutions of a vehicle front compartment structure and a vehicle.

According to a first aspect of the present disclosure, a vehicle front compartment structure is provided, which includes: a front anti-collision beam; a front longitudinal beam; an upper side beam; and an energy-absorbing box, a side of the energy-absorbing box being connected to the front anti-collision beam, and the front longitudinal beam and the upper side beam being separately connected to another side of the energy-absorbing box; a first force transmission structure being formed through the front anti-collision beam, the energy-absorbing box, and the upper side beam; and a second force transmission structure being formed through the front anti-collision beam, the energy-absorbing box, and the front longitudinal beam.

Optionally, in a first direction, widths of cross sections of ends that are of the front longitudinal beam and the upper side beam and that face the front anti-collision beam are less than or equal to a width of a cross section of the energy-absorbing box.

Optionally, in a first direction, a width of the energy-absorbing box is equal to a sum of widths of the front longitudinal beam and the upper side beam.

Optionally, a bottom surface of an end that is of the upper side beam and that faces the front anti-collision beam is flush with a bottom surface of the energy-absorbing box.

The upper side beam extends toward an A-pillar, and the upper side beam is connected to the A-pillar, to transmit an impact force to the A-pillar through the first force transmission structure.

Optionally, the upper side beam includes: a support plate, where the support plate is arranged on a side that is of the front longitudinal beam and that faces the upper side beam, and the support plate is arranged between the energy-absorbing box and the upper side beam, to transmit the impact force to the upper side beam.

Optionally, the upper side beam further includes: a first beam body and a second beam body, where the first beam body is arranged above the second beam body, the first beam body and the second beam body fit with each other to define an energy-absorbing cavity, and the second beam body is connected to the energy-absorbing box through the support plate.

Optionally, the vehicle front compartment structure further includes: a wheel housing, the wheel housing being separately connected to the front longitudinal beam and the upper side beam, the wheel housing being located between the front longitudinal beam and the upper side beam, and the first force transmission structure being formed through the front anti-collision beam, the energy-absorbing box, the upper side beam, and the wheel housing, to transmit the impact force to the A-pillar.

Optionally, each wheel housing is provided with a first flange and a second flange, the first flange is connected to the front longitudinal beam, and the second flange is connected to the second beam body.

Optionally, a shock absorption cavity is defined between the first flange and the front longitudinal beam, and a shock absorption cavity is defined between the second flange and the upper side beam.

Optionally, two front longitudinal beams extend in a direction toward the front anti-collision beam, and a width distance between the two front longitudinal beams gradually increases, to form a splayed structure.

Optionally, the vehicle front compartment structure further includes: a first connecting rod and a second connecting rod, the first connecting rod being arranged between the two front longitudinal beams, the second connecting rod being arranged between two wheel housings, the first connecting rod being close to the front anti-collision beam relative to the second connecting rod, the first connecting rod, the two front longitudinal beams, and the second connecting rod enclosing a first closed loop, and the second connecting rod, the two front longitudinal beams, and a cowl panel enclosing a second closed loop.

Optionally, the vehicle front compartment structure further includes: a third connecting rod, the third connecting rod being separately connected to the front longitudinal beam and the cowl panel, and the second connecting rod, the two wheel housings, and the third connecting rod enclosing the second closed loop.

According to a second aspect of the present disclosure, a vehicle is provided, which includes the vehicle front compartment structure according to the foregoing embodiment.

A technical effect of the embodiments of the present disclosure is as follows:

The embodiments of the present disclosure provide a vehicle front compartment structure. The width of the energy-absorbing box is increased, and both the upper side beam and the front longitudinal beam are connected to the energy-absorbing box, to enlarge the overlap area between the energy-absorbing box on the front anti-collision beam overlaps and a collision barrier, so that the first force transmission structure that has a top force transmission path and the second force transmission structure that has a bottom force transmission path are formed while the energy-absorbing box absorbs collision energy. Therefore, a collision force is dispersedly transmitted, requirements of the vehicle during collisions such as a frontal collision and a small-offset collision are met, collision resistance of the vehicle is improved, and vehicle safety is improved.

Other features and advantages of the present disclosure will become apparent from the following detailed description of example embodiments of the present disclosure with reference to the accompanying drawings.

### BRIEF DESCRIPTION OF THE DRAWINGS

The accompanying drawings are incorporated into this specification and constitute a part of this specification, show the embodiments of the present disclosure, and are used together with description thereof to describe the principle of the present disclosure.
FIG. 1 is a top view of a vehicle front compartment structure according to an embodiment of the present disclosure;
FIG. 2 is a cross-sectional view along a line A-A in FIG. 1;
FIG. 3 is another top view of a vehicle front compartment structure according to an embodiment of the present disclosure;
FIG. 4 is a structural exploded view of an upper side beam of a vehicle front compartment structure according to an embodiment of the present disclosure;
FIG. 5 is a deflected view of a front longitudinal beam of a vehicle front compartment structure according to an embodiment of the present disclosure;
FIG. 6 is a structural diagram of a wheel housing of a vehicle front compartment structure according to an embodiment of the present disclosure;
FIG. 7 is a top view of a wheel housing of a vehicle front compartment structure according to an embodiment of the present disclosure;
FIG. 8 is a collision force transmission diagram of a vehicle front compartment structure according to an embodiment of the present disclosure; and
FIG. 9 is another collision force transmission diagram of a vehicle front compartment structure according to an embodiment of the present disclosure.

### Reference numerals:

Vehicle front compartment structure 100;
Front anti-collision beam 10;
Front longitudinal beam 20;
Upper side beam 30; First beam body 31; Second beam body 32;
Energy-absorbing box 40;
Support plate 51; First connecting rod 52; Second connecting rod 53; Third connecting rod 54;
Wheel housing 60; First flange 61; Second flange 62; Shock absorption cavity 63;
Cowl panel 71; A-pillar 72; Connecting plate 73; Tire 74; and
Collision barrier 80.

### DETAILED DESCRIPTION

Various example embodiments of the present disclosure are now described in detail with reference to the accompanying drawings. It should be noted that: unless otherwise specified, opposite arrangements, numerical expressions, and numerical values of components and steps described in these embodiments do not limit the scope of the present disclosure.

The following description of at least one example embodiment is merely illustrative, and in no way constitute any limitation on the present disclosure and application or use thereof.

Technologies, methods, and devices known to a person of ordinary skill in related art may not be discussed in detail, but where appropriate, the technologies, the methods, and the devices should be considered as a part of this specification.

In all examples shown and discussed herein, any specific value should be construed as merely an example and not as a limitation. Therefore, a different value may be used in another example of the example embodiments.

It should be noted that: similar reference numerals and letters represent similar items in the accompanying drawings below. Therefore, once an item is defined in one accompanying drawing, the item does not need to be further discussed in subsequent accompanying drawings.

The following specifically describes, with reference to the accompanying drawings, a vehicle front compartment structure 100 according to an embodiment of the present disclosure.

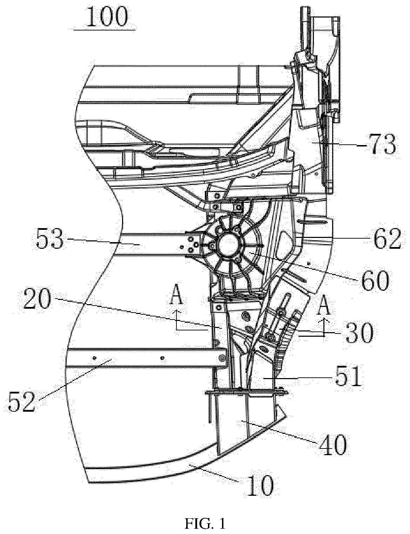

As shown in FIG. 1 to FIG. 9, the vehicle front compartment structure 100 according to this embodiment of the present disclosure includes a front anti-collision beam 10, a front longitudinal beam 20, an upper side beam 30, and an energy-absorbing box 40.

Specifically, a side of the energy-absorbing box 40 is connected to the front anti-collision beam 10, and each front longitudinal beam 20 and each upper side beam 30 are separately connected to another side of the energy-absorbing box 40. A first force transmission structure is formed through the front anti-collision beam 10, the energy-absorbing box 40, and the upper side beam 30. A second force transmission structure is formed through the front anti-collision beam 10, the energy-absorbing box 40, and the front longitudinal beam 20.

In other words, refer to FIG. 1 to FIG. 4, the vehicle front compartment structure 100 according to this embodiment of the present disclosure is mainly applied to an electric vehicle, and the vehicle front compartment structure 100 mainly includes the front anti-collision beam 10, the front longitudinal beam 20, the upper side beam 30, and the energy-absorbing box 40. Two front longitudinal beams 20 are spaced apart on an inner side of the front anti-collision beam 10. An end of each upper side beam 30 is connected to the front anti-collision beam 10, and the other end of each upper side beam 30 extends toward an A-pillar 72, so that a force transmission channel is formed between the upper side beam 30 and the A-pillar 72. A side of the energy-absorbing box 40 is connected to the front anti-collision beam 10, and another side of the energy-absorbing box 40 is connected to each front longitudinal beam 20 and each upper side beam 30. Compared with the related art, in the present disclosure, widths of the front anti-collision beam 10 and the energy-absorbing box 40 in a Y direction are increased, to increase an area of a region in which the energy-absorbing box 40 overlaps with a collision barrier 80, and both the front longitudinal beam 20 and the upper side beam 30 are connected to the energy-absorbing box 40 to avoid vacancy on an outer side of the front longitudinal beam 20.

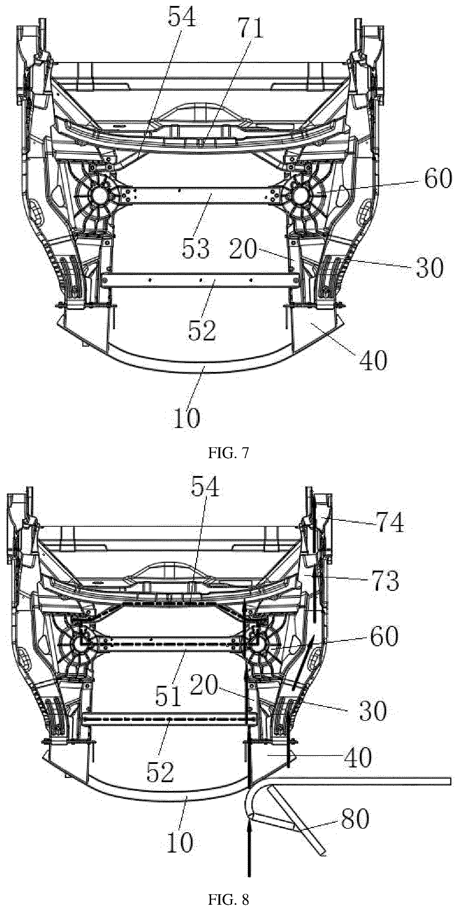

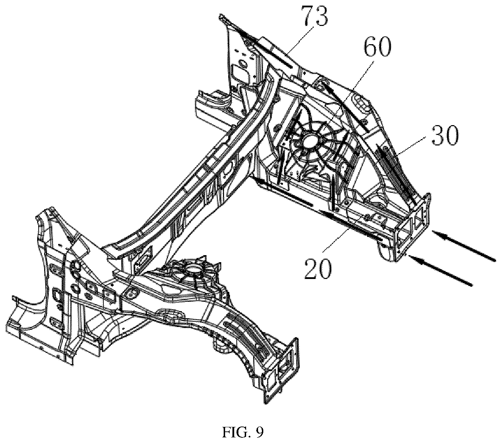

As shown in FIG. 8 and FIG. 9, the first force transmission structure is formed through the front anti-collision beam 10, the energy-absorbing box 40, and the upper side beam 30. When the vehicle encounters a collision, a part of collision force is transmitted to the A-pillar 72 along a top force transmission path of the vehicle through the first force transmission structure. The second force transmission structure is formed through the front anti-collision beam 10, the energy-absorbing box 40, and the front longitudinal beam 20, and another part of collision force may be transmitted to a chassis of the vehicle along a bottom force transmission path of the vehicle through the second force transmission structure. A width of the energy-absorbing box 40 is increased, and both the upper side beam 30 and the front longitudinal beam 20 are connected to the energy-absorbing box 40, to enlarge the overlap area between the energy-absorbing box 40 on the front anti-collision beam 10 and a collision barrier, so that the first force transmission structure that has the top force transmission path and the second force transmission structure that has the bottom force transmission path (the force transmission paths are shown as directions indicated by arrows in FIG. 8 and FIG. 9) are formed while the energy-absorbing box 40 absorbs collision energy. Therefore, a collision force is dispersedly transmitted, requirements of the vehicle during collisions such as a frontal collision and a small-offset collision are met, collision resistance of the vehicle is improved, and vehicle safety is improved.

In the following embodiments of the present disclosure, the Y direction may be understood as a width direction of the vehicle or a length direction of a first connecting rod 52, an X direction may be understood as a length direction of the front longitudinal beam 20 or a length direction of the vehicle, and a Z direction may be understood as a height direction of the vehicle. The first force transmission path of the present disclosure can effectively cope with the small-offset collision and ensure collision force transmission during the collision. The second force transmission path can serve as a main force transmission path, to undertake collision force transmission of the vehicle during the frontal collision and the small-offset collision.

Therefore, in the vehicle front compartment structure 100 according to this embodiment of the present disclosure, the width of the energy-absorbing box 40 is increased, and both the upper side beam 30 and the front longitudinal beam 20 are connected to the energy-absorbing box 40, to enlarge the overlap area between the energy-absorbing box 40 on the front anti-collision beam 10 and the collision barrier, so that the first force transmission structure that has the top force transmission path and the second force transmission structure that has the bottom force transmission path are formed while the energy-absorbing box 40 absorbs collision energy. Therefore, the collision force is dispersedly transmitted, the requirements of the vehicle during the collisions such as the frontal collision and the small-offset collision are met, the collision resistance of the vehicle is improved, and vehicle safety is improved.

According to an embodiment of the present disclosure, in a first direction, widths of cross sections of ends that are of the front longitudinal beam 20 and the upper side beam 30 and that face the front anti-collision beam 10 are less than or equal to a width of a cross section of the energy-absorbing box 40; and a bottom surface of the end that is of the upper side beam 30 and that faces the front anti-collision beam 10 is flush with a bottom surface of the energy-absorbing box 40.

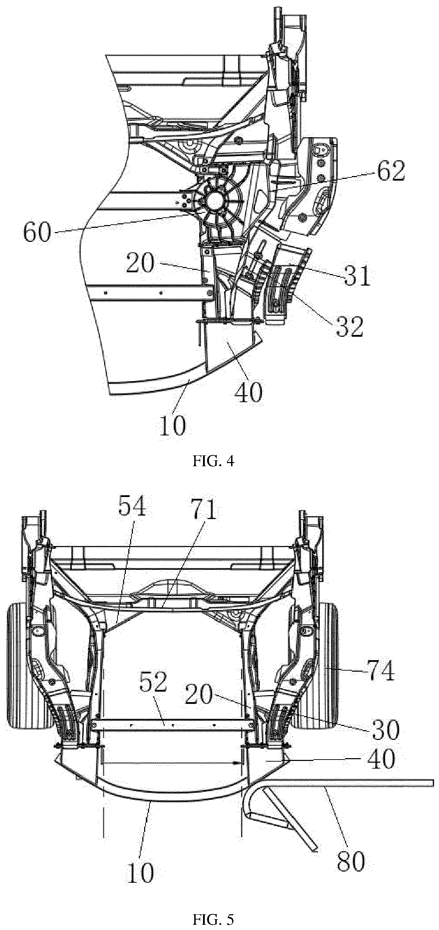

That is, as shown in FIG. 1 and FIG. 4, in the first direction, the widths of the cross sections of the ends (front sections of the front longitudinal beam 20 and the upper side beam 30) that are of the front longitudinal beam 20 and the upper side beam 30 and that face the front anti-collision beam 10 are less than or equal to the width of the cross section of the energy-absorbing box 40. The first direction may be understood as the width direction (the Y direction) of the vehicle, a shape of a side that is of the energy-absorbing box 40 and that faces the front anti-collision beam 10 corresponds to a curved shape of the front anti-collision beam 10, and the bottom surface of the end that is of the upper side beam 30 and that faces the front anti-collision beam 10 is flush with the bottom surface of the energy-absorbing box 40. Optionally, in the first direction, the width of the energy-absorbing box 40 is equal to a sum of the widths of the front longitudinal beam 20 and the upper side beam 30, that is, sizes of the cross sections of the ends that are of the front longitudinal beam 20 and the upper side beam 30 and that face the front anti-collision beam 10 can be roughly equivalent to a size of the cross section of the energy-absorbing box 40, to ensure that, when the vehicle encounters the collision, the energy-absorbing box 40 performs crumple energy absorption on a generated collision force, and the remaining collision force can be dispersed to the two force transmission paths including the front longitudinal beam 20 and the upper side beam 30. In this way, a collision force transmission effect is ensured.

In the present disclosure, the upper side beam 30 extends toward the A-pillar, and the upper side beam 30 is connected to the A-pillar, to form the force transmission channel between the upper side beam 30 and the A-pillar 72, so that an impact force is transmitted to the A-pillar 72 through the first force transmission structure. Therefore, the collision resistance of the vehicle is improved, and vehicle safety is improved.

According to an embodiment of the present disclosure, the upper side beam 30 includes: a support plate 51, where the support plate 51 is arranged on a side that is of the front longitudinal beam 20 and that faces the upper side beam 30, and the support plate 51 is arranged between the energy-absorbing box 40 and the upper side beam 30, to transmit the impact force to the upper side beam 30.

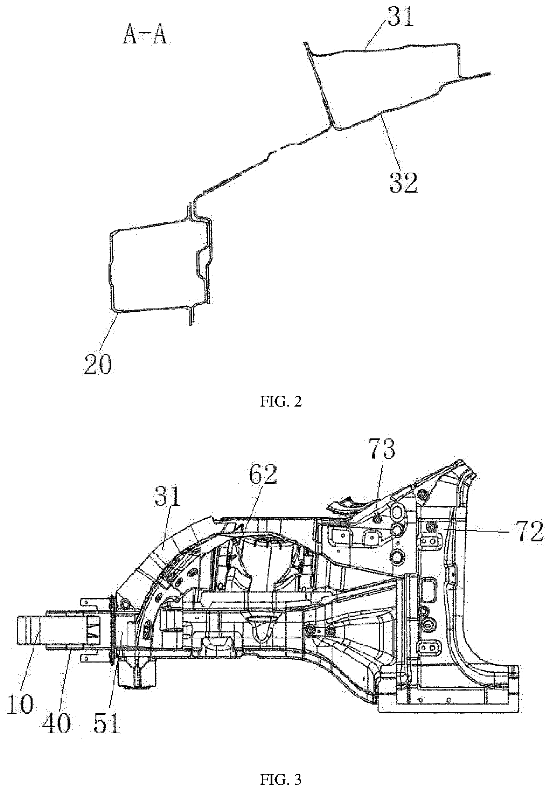

In other words, refer to FIG. 1 and FIG. 3, the upper side beam 30 is further provided with the support plate 51. The support plate 51 is arranged on the side that is of the front longitudinal beam 20 and that faces the upper side beam 30, that is, the support plate 51 is arranged on an outer side that is of the front longitudinal beam 20 and that faces the vehicle. The support plate 51 is located between the energy-absorbing box 40 and the upper side beam 30. The support plate 51 fully fills vacant regions that are of the front longitudinal beam 20 and the upper side beam 30 and that face the front anti-collision beam 10. When the vehicle encounters the collision, the support plate 51 may obliquely transmit the impact force to the upper side beam 30, and disperse the impact force to the A-pillar 72 through a connecting plate 73 on the A-pillar 72, to form the top force transmission path. Therefore, collision resistance of the front anti-collision beam 10 is improved, and driving safety is improved.

According to an embodiment of the present disclosure, the upper side beam 30 further includes: a first beam body 31 and a second beam body 32, where the first beam body 31 is arranged above the second beam body 32, the first beam body 31 and the second beam body 32 fit with each other to define an energy-absorbing cavity, and the second beam body 32 is connected to the energy-absorbing box 40 through the support plate 51.

That is, as shown in FIG. 1 to FIG. 4, each upper side beam 30 mainly includes the first beam body 31 and the second beam body 32. The first beam body 31 is arranged above the second beam body 32 (refer to FIG. 2 and FIG. 4). The first beam body 31 and the second beam body 32 fit with each other to define the energy-absorbing cavity. The support plate 51 is lap-jointed with the second beam body 32. The support plate 51 is connected to the energy-absorbing box 40. The first beam body 31 can cover the support plate 51 and the second beam body 32. The first beam body 31 and the second beam body 32 are buckled with each other from top to bottom to form a hollow structure. In this way, the energy-absorbing cavity is defined and an energy-absorbing effect of the upper side beam 30 is effectively improved. Widths of the energy-absorbing cavity of the upper side beam 30 and an energy-absorbing cavity of the front longitudinal beam 20 are equivalent to a size of an energy-absorbing cavity of the widened energy-absorbing box 40, to further ensure the collision force transmission effect.

In some specific implementations of the present disclosure, the vehicle front compartment structure 100 further includes: a wheel housing 60, the wheel housing 60 being separately connected to the front longitudinal beam 20 and the upper side beam 30, the wheel housing 60 being located between the front longitudinal beam 20 and the upper side beam 30, and the first force transmission structure being formed through the front anti-collision beam 10, the energy-absorbing box 40, the upper side beam 30, and the wheel housing 60, to transmit the impact force to the A-pillar 72. Each wheel housing 60 is provided with a first flange 61 and a second flange 62, the first flange 61 is connected to the front longitudinal beam 20, and the second flange 62 is connected to the second beam body 32. A shock absorption cavity 63 is defined between the first flange 61 and the front longitudinal beam 20, and a shock absorption cavity 63 is defined between the second flange 62 and the upper side beam 30.

In other words, as shown in FIG. 1, FIG. 6, and FIG. 7, the vehicle front compartment structure 100 further includes the wheel housing 60. Two wheel housings 60 from the left to the right are arranged opposite to each other on a side that is of the front longitudinal beam 20 and that is far away from the front anti-collision beam 10. A wheel is arranged below the wheel housing 60. Each wheel housing 60 is connected to the upper side beam 30. The wheel housing 60 is located between the front longitudinal beam 20 and the upper side beam 30. The width of the energy-absorbing box 40 is increased on an outer side of the energy-absorbing box 40. Orientations such as "outer side" and "behind" described in the present disclosure are based on an orientation of the vehicle. The front longitudinal beam 20 is connected and assembled behind the energy-absorbing box 40, the support plate 51 is welded to the outer side of the front longitudinal beam 20, the second beam body 32 in the upper side beam 30 is lap-jointed behind the support plate 51, the wheel housing 60 obtained through aluminum casting is lap-jointed on a left side of the second beam body 32, the wheel housing 60 may be screwed between the front longitudinal beam 20 and the second beam body 32, and the upper side beam 30 is connected to the A-pillar 72 through the connecting plate 73 of the A-pillar 72. A Z-direction height plane a is an upper top end surface of the front anti-collision beam 10, a front end of a lower section (the second beam body 32) of the upper side beam 30 is lap-jointed with the upper top end surface of the front anti-collision beam 10, and the upper side beam 30 is gradually raised from the front end in the Z direction and is lap-jointed with the wheel housing 60 obtained through aluminum casting.

The first force transmission structure is formed through the front anti-collision beam 10, the energy-absorbing box 40, the upper side beam 30, and the wheel housing 60. An upper section (the first beam body 31) of the upper side beam 30 covers the support plate 51 and the lower section (the second beam body 32) of the upper side beam 30 in the Z direction (the height direction of the vehicle), and forms a cavity together with the support plate 51, the second beam body 32, and the wheel housing 60, and the cavity serves as a small-offset collision force transmission path, to transmit, to the A-pillar 72, the collision force transmitted from the front anti-collision beam 10.

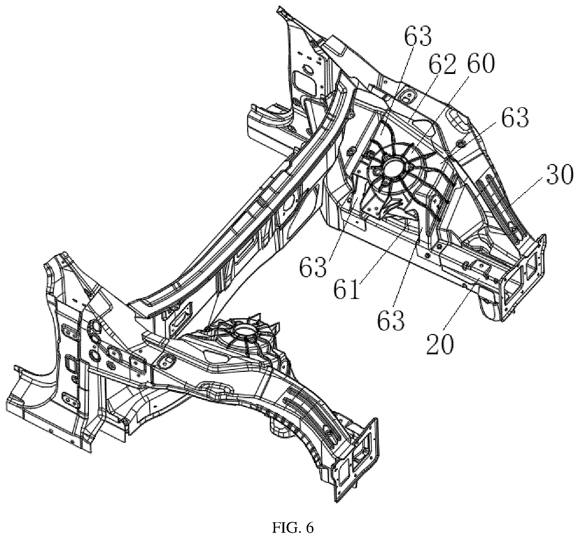

Optionally, refer to FIG. 6, each wheel housing 60 is provided with a first flange 61 and a second flange 62, the first flange 61 is connected to the front longitudinal beam 20, and the second flange 62 is connected to the second beam body 32. A shock absorption cavity 63 is defined between the first flange 61 and the front longitudinal beam 20, and a shock absorption cavity 63 is also defined between the second flange 62 and the upper side beam 30. The wheel housing 60 obtained through aluminum casting may be riveted on the front longitudinal beam 20, the wheel housing 60 is integrated with the first flange 61 and the second flange 62, and a front end of the wheel housing 60 (an end that faces the front anti-collision beam 10) has two shock absorption cavities 63 arranged opposite to each other. A rear end of the wheel housing 60 has two shock absorption cavities 63 arranged opposite to each other. The first flange 61 of the wheel housing 60 may be straddled on the front longitudinal beam 20, and located on an inner side of a facade of the front longitudinal beam 20, and the second flange 62 of the wheel housing 60 can be lap-jointed with the upper side beam 30. The two groups of shock absorption cavities 63 in the front and rear of the wheel housing 60 can facilitate assembly of shock absorbers, improve dynamic stiffness of the shock absorbers, improve vehicle handling, and simultaneously serve as collision force transmission paths.

In some specific implementations of the present disclosure, two front longitudinal beams 20 extend in a direction toward the front anti-collision beam 10, and a width distance between the two front longitudinal beams 20 gradually increases to form a splayed structure. The vehicle front compartment structure 100 further includes: a first connecting rod 52 and a second connecting rod 53, the first connecting rod 52 being arranged between the two front longitudinal beams 20, the second connecting rod 53 being arranged between the two wheel housings 60, the first connecting rod 52 being close to the front anti-collision beam 10 relative to the second connecting rod 53, the first connecting rod 52, the two front longitudinal beams 20, and the second connecting rod 53 enclosing a first closed loop, and the second connecting rod 53, the two front longitudinal beams 20, and a cowl panel 71 enclosing a second closed loop. The vehicle front compartment structure 100 further includes: a third connecting rod 54, the third connecting rod 54 being separately connected to the front longitudinal beam 20 and the cowl panel 71, and the second connecting rod 53, the two wheel housings 60, and the third connecting rod 54 enclosing the second closed loop.

That is, refer to FIG. 5, the two front longitudinal beams 20 are symmetrically arranged, the two front longitudinal beams 20 are in the extension direction toward the front anti-collision beam 10, and a distance between the two front longitudinal beams 20 gradually increases to form a splayed structure. Because a tail part of the front longitudinal beam 20 (an end far away from the front anti-collision beam 10) needs to avoid a tire 74, the front longitudinal beams 20 arranged in the splayed shape can facilitate reserving a spatial position for the tire 74 when the vehicle steers. An engine or a motor assembly may be placed above a middle part of the front longitudinal beam 20, a front end of the front longitudinal beam 20 is connected to the front anti-collision beam 10. A front section of the front longitudinal beam 20 undertakes an arrangement function and serves as a main force transmission path, to undertake collision force transmission of the vehicle during the frontal collision and the small-offset collision.

In a conventional structure, the front sections of the two front longitudinal beams 20 are arranged in parallel. In an arrangement manner of the front longitudinal beams 20 in the related art, the front anti-collision beam 10 connected to the front section of the front longitudinal beam 20 absorbs energy at a boundary line of a small-offset collision barrier, and the energy-absorbing box 40 is directly opposite to a rounded corner of the barrier. In the new structure of the present disclosure, the tail parts of the two front longitudinal beams 20 need to avoid the tires 74, and the front end of each front longitudinal beam 20 is 3° to 5° outward relative to the tail part to form the splayed structure (shown as dashed lines in FIG. 5). In this new arrangement, the new arrangement is inclined at an angle θ relative to the old arrangement, and the energy-absorbing box 40 behind the front anti-collision beam 10 is directly opposite to a straightline section part of the collision barrier 80. In this way, the overlap area between the energy-absorbing box 40 and the collision barrier 80 is enlarged, to ensure collision force transmission during the collision.

As shown in FIG. 7 and FIG. 8, the vehicle front compartment structure 100 further includes the first connecting rod 52 and the second connecting rod 53. The first connecting rod 52 serves as a front compartment cross beam. The first connecting rod 52 is arranged between the two front longitudinal beams 20. The second connecting rod 53 is arranged between the two front longitudinal beams 20. The first connecting rod 52 is close to the front anti-collision beam 10 relative to the second connecting rod 53. The second connecting rod 53 is arranged between the two wheel housings 60. The first connecting rod 52, the two front longitudinal beams 20, and the second connecting rod 53 enclose the first closed loop, and the second connecting rod 53, the two front longitudinal beams 20, and the cowl panel 71 enclose the second closed loop (shown as dashed lines in FIG. 8). The design in which the wheel housing 60 obtained through aluminum casting is straddled on the front longitudinal beam 20 and there are two closed loops is conducive to improving dynamic stiffness of an installation point of a front shock absorber and dynamic stiffness of a vehicle body, and improving vehicle handling.

The vehicle front compartment structure 100 further includes the third connecting rod 54. The third connecting rod 54 is arranged at the end that is of the front longitudinal beam 20 and that is far away from the front anti-collision beam 10. The third connecting rod 54 is connected to the cowl panel 71. A shape of the third connecting rod 54 corresponds to a curved shape of the cowl panel 71. Two ends of the third connecting rod 54 are respectively lap-jointed with the two wheel housings 60, and a middle section of the third connecting rod 54 is lap-jointed with the cowl panel 71. The second connecting rod 53, the two wheel housings 60, and the third connecting rod 54 enclose the second closed loop. The design in which the wheel housing 60 obtained through aluminum casting is straddled on the front longitudinal beam 20 and there are two closed loops is conducive to improving dynamic stiffness of an installation point of a front shock absorber and dynamic stiffness of a vehicle body, and improving vehicle handling.

In a vehicle collision force transmission process of the present disclosure, as shown in FIG. 8 and FIG. 9, the first force transmission structure and the second force transmission structure form a top path and a bottom path. In frontal 100% overlap and small-offset collisions, the front anti-collision beam 10 is collided with the collision barrier 80, the widened energy-absorbing box 40 performs crumple energy absorption, and the support plate 51 at a rear end of the energy-absorbing box 40 obliquely transmits the impact force to the upper side beam 30 and the connecting plate 73, and transmits and disperses the impact force to the A-pillar 72, to form the top force transmission path (refer to the directions indicated by the arrows in FIG. 8 and FIG. 9). The energy-absorbing box 40 and the front longitudinal beam 20 form the bottom force transmission path, and a part of impact force is dispersed to a right wheel housing 60 through the first connecting rod 52, the second connecting rod 53, and the third connecting rod 54.

In the present disclosure, the force transmission paths of the front compartment of the vehicle are redesigned, to add a force transmission path to the pure electric vehicle for an offset collision, and a key structure on the path is designed and optimized in detail. In addition, a trend and a span of the front longitudinal beam 20 are rearranged, and an associated structure and a connection relationship between the energy-absorbing box 40 on the front anti-collision beam 10 and the upper side beam 30 are optimized. Based on this, related structures such as the upper side beam 30, the wheel housing 60, the first connecting rod 52, the second connecting rod 53, and the third connecting rod 54 are optimized and designed to improve the collision resistance of the front anti-collision beam 10. In addition, structures such as the upper side beam 30 and the front longitudinal beam 20 fit with each other to form a cavity with a closed cross section, to form two closed loops and two force transmission paths. Therefore, transmission, decomposition, and resistant capabilities for the impact force are improved, structural stiffness during shock absorber installation is improved, driving quality of the vehicle is improved, the vehicle is actively guided to slide to a Y-direction side during the collision, and vehicle and occupant safety is ensured.

In the present disclosure, there is no specific limitation on materials, cross-sectional shapes, connection manners, and the like of the structures such as the front longitudinal beam 20, the upper side beam 30, the first connecting rod 52, the second connecting rod 53, the third connecting rod 54, and the wheel housing 60 in the vehicle front compartment structure 100, and any design that can meet collision requirements of the present disclosure shall fall within the protection scope of the present disclosure.

Certainly, another structure and another operation principle in the vehicle front compartment structure 100 can be understood and implemented by a person skilled in the art. Details are not described in detail in the present disclosure.

In conclusion, in the vehicle front compartment structure 100 according to this embodiment of the present disclosure, the width of the energy-absorbing box 40 is increased, and both the upper side beam 30 and the front longitudinal beam 20 are connected to the energy-absorbing box 40, to enlarge the overlap area between the energy-absorbing box 40 on the front anti-collision beam 10 and the collision barrier, so that the first force transmission structure that has the top force transmission path and the second force transmission structure that has the bottom force transmission path are formed while the energy-absorbing box 40 absorbs collision energy. Therefore, the collision force is dispersedly transmitted, the requirements of the vehicle during the collisions such as the frontal collision and the small-offset collision are met, the collision resistance of the vehicle is improved, and vehicle safety is improved.

An embodiment of the present disclosure further provides a vehicle, which includes the vehicle front compartment structure 100 in the foregoing embodiment. The vehicle in the present disclosure may be an electric vehicle, a fuel vehicle, or another type of hybrid vehicle. Because the vehicle front compartment structure 100 according to the embodiments of the present disclosure has the foregoing technical effects, the vehicle according to the embodiments of the present disclosure should also have the corresponding technical effects. To be specific, the vehicle in the present disclosure uses the vehicle front compartment structure 100, to enlarge the overlap area between the energy-absorbing box 40 on the front anti-collision beam 10 and the collision barrier, so that the first force transmission structure that has the top force transmission path and the second force transmission structure that has the bottom force transmission path are formed while the energy-absorbing box 40 absorbs collision energy. Therefore, the collision force is dispersedly transmitted, the requirements of the vehicle during the collisions such as the frontal collision and the small-offset collision are met, the collision resistance of the vehicle is improved, and vehicle safety is improved.

Although some specific embodiments of the present disclosure have been described in detail by way of examples, a person skilled in the art should understand that the foregoing examples are only for description and are not intended to limit the scope of the present disclosure. A person skilled in the art should understand that modifications may be made to the foregoing embodiments without departing from the scope and spirit of the present disclosure. The scope of the present disclosure is limited by the appended claims.

## Claims

1. A vehicle front compartment structure (100), comprising:
a front anti-collision beam (10);
a front longitudinal beam (20);
an upper side beam (30); and
an energy-absorbing box (40), a side of the energy-absorbing box (40) being connected to the front anti-collision beam (10), and the front longitudinal beam (20) and the upper side beam (30) being separately connected to another side of the energy-absorbing box (40); a first force transmission structure being formed through the front anti-collision beam (10), the energy-absorbing box (40), and the upper side beam (30); and a second force transmission structure being formed through the front anti-collision beam (10), the energy-absorbing box (40), and the front longitudinal beam (20).

2. The vehicle front compartment structure (100) according to claim 1, wherein, in a first direction, a width of the energy-absorbing box (40) is equal to a sum of widths of the front longitudinal beam (20) and the upper side beam (30).

3. The vehicle front compartment structure (100) according to claim 1 or 2, wherein a bottom surface of an end that is of the upper side beam (30) and that faces the front anti-collision beam (10) is flush with a bottom surface of the energy-absorbing box (40).

4. The vehicle front compartment structure (100) according to any one of claims 1 to 3, wherein the upper side beam (30) extends toward an A-pillar (72), and the upper side beam (30) is connected to the A-pillar (72), to transmit an impact force to the A-pillar (72) through the first force transmission structure.

5. The vehicle front compartment structure (100) according to any one of claims 1 to 4, wherein the upper side beam (30) comprises:
a support plate (51), the support plate (51) is arranged on a side that is of the front longitudinal beam (20) and that faces the upper side beam (30), and the support plate (51) is arranged between the energy-absorbing box (40) and the upper side beam (30), to transmit the impact force to the upper side beam (30).

6. The vehicle front compartment structure (100) according to any one of claims 1 to 5, wherein the upper side beam (30) comprises:
a first beam body (31); and
a second beam body (32), the first beam body (31) is arranged above the second beam body (32), the first beam body (31) and the second beam body (32) fit with each other to define an energy-absorbing cavity, and the second beam body (32) is connected to the energy-absorbing box (40) through the support plate (51).

7. The vehicle front compartment structure (100) according to any one of claims 1 to 6, further comprising:
a wheel housing (60), the wheel housing (60) being separately connected to the front longitudinal beam (20) and the upper side beam (30), the wheel housing (60) being arranged between the front longitudinal beam (20) and the upper side beam (30), and the first force transmission structure being formed through the front anti-collision beam (10), the energy-absorbing box (40), the upper side beam (30), and the wheel housing (60).

8. The vehicle front compartment structure (100) according to any one of claims 1 to 7, wherein each wheel housing (60) is provided with a first flange (61) and a second flange (62), the first flange (61) is connected to the front longitudinal beam (20), and the second flange (62) is connected to the second beam body (32).

9. The vehicle front compartment structure (100) according to any one of claims 1 to 8, wherein two front longitudinal beams (20) extend in a direction toward the front anti-collision beam (10), and a width distance between the two front longitudinal beams (20) gradually increases to form a splayed structure.

10. The vehicle front compartment structure (100) according to any one of claims 1 to 9, further comprising:
a first connecting rod (52), the first connecting rod (52) being arranged between the two front longitudinal beams (20); and
a second connecting rod (53), the second connecting rod (53) being arranged between two wheel housings (60), the first connecting rod (52) being close to the front anti-collision beam (10) relative to the second connecting rod (53), the first connecting rod (52), the two front longitudinal beams (20), and the second connecting rod (53) enclosing a first closed loop, and the second connecting rod (53), the two front longitudinal beams (20), and a cowl panel (71) enclosing a second closed loop.

11. The vehicle front compartment structure (100) according to any one of claims 1 to 10, further comprising:
a third connecting rod (54), the third connecting rod (54) being separately connected to the front longitudinal beam (20) and the cowl panel (71), and the second connecting rod (53), the two wheel housings (60), and the third connecting rod (54) enclosing the second closed loop.

12. A vehicle, comprising the vehicle front compartment structure (100) according to any one of claims 1 to 11.
